# FASCICULE DE BREVET EUROPEEN

(11) **EP 3 785 064 B1**
(45) Date de publication et mention de la délivrance du brevet: **23.08.2023**
(21) Numéro de dépôt: 18833980.8
(22) Date de dépôt: 19.12.2018
(51) Int. Cl.: G02B 26/06

(54) **CAVITE MULTI PASSAGE D'UN DISPOSITIF OPTIQUE DE MANIPULATION SPATIALE D'UN RAYONNEMENT LUMINEUX**
HOHLRAUM MIT MEHREREN DURCHGÄNGEN EINER OPTISCHEN VORRICHTUNG ZUR RÄUMLICHEN MANIPULATION VON LICHTSTRAHLUNG
MULTI-PASSAGE CAVITY OF AN OPTICAL DEVICE FOR SPATIAL MANIPULATION OF LUMINOUS RADIATION

(30) Priorité: 29.12.2017 FR 1763367
(43) Date de publication de la demande: 03.03.2021
(73) Titulaire: Cailabs, 35200 Rennes (FR)
(72) Inventeur: JACQUARD, Clément, 35000 Rennes (FR); DESBIOLLES, Pascal, 22300 Lannion (FR); DENOLLE, Bertrand, 35000 Rennes (FR); LABROILLE, Guillaume, 35000 Rennes (FR); PINEL, Olivier, 35000 Rennes (FR)
(74) Mandataire: IP Trust
(86) Numéro de dépôt international: PCT/FR2018/053402
(87) Numéro de publication internationale: WO 2019/129954

(56) Documents cités:
- US-B1- 6 249 346
- GUILLAUME LABROILLE ET AL: "Mode Selective 10-Mode Multiplexer based on Multi-Plane Light Conversion", OPTICAL FIBER COMMUNICATION CONFERENCE 2016, ANAHEIM, CALIFORNIA UNITED STATES, 20-22 MARCH 2016, 1 janvier 2016 (2016-01-01), page Th3E.5, XP055509732, US DOI: 10.1364/OFC.2016.Th3E.5 ISBN: 978-1-943580-07-1
- LABROILLE GUILLAUME ET AL: "Mode selective 10-mode multiplexer based on multi-plane light conversion", 2016 OPTICAL FIBER COMMUNICATIONS CONFERENCE AND EXHIBITION (OFC), OSA, 20 March 2016 (2016-03-20), pages 1-3, XP032942487, [retrieved on 2016-08-09]

## Description

### DOMAINE DE L'INVENTION

La présente invention concerne un dispositif optique de manipulation d'un rayonnement lumineux. Elle concerne plus particulièrement un dispositif optique comprenant une cavité multi passage configurée pour modifier le profil de phase transverse d'un rayonnement lumineux.

### ARRIERE PLAN TECHNOLOGIQUE DE L'INVENTION

On connaît de US9250454 et US2017010463 des dispositifs optiques, désignés par l'acronyme MPLC (Multi Plane Light Conversion selon l'expression anglo-saxonne), permettant de réaliser toute transformation spatiale unitaire d'un rayonnement lumineux.

D'un point de vue théorique, et comme cela a été établi dans *«* Programmable unitary spatial mode manipulation », Morizur et Al, J. Opt. Soc. Am. A/Vol. 27, No. 11/November 2010*,* une transformation spatiale unitaire peut effectivement être décomposée en une succession de transformations primaires, chaque transformation primaire affectant le profil de phase transverse du rayonnement lumineux. Dans la pratique, et sans que cela ne forme une limitation quelconque de cette technologie, les composants MPLC appliquent typiquement entre 3 à 25 transformations primaires.

Le document « G. Labroille, P. Jian, N. Barré, B. Denolle, and J. Morizur, "Mode Sélective 10-Mode Multiplexer based on Multi-Plane Light Conversion, in Optical Fiber Communication Conférence, OSA Technical Digest (online) (Optical Society of America, 2016), paper Th3E.5. » divulgue un mode de mise en oeuvre particulier d'un dispositif MPLC. Il comprend un support sur lequel on a disposé un étage d'entrée permettant d'injecter dans le dispositif un rayonnement lumineux incident, un étage de sortie pour extraire du dispositif le rayonnement lumineux transformé, un miroir disposé en vis-à-vis d'un élément optique réfléchissant pour former une cavité multi passage et permettre de projeter et réfléchir une pluralité de fois sur l'élément optique le rayonnement lumineux incident. L'élément optique présente une face principale microstructurée pour appliquer, à chaque réflexion du rayonnement incident, une modification du profil transverse de phase du signal.

Les pièces constituant un tel dispositif doivent être positionnées et orientées les unes relativement aux autres avec une très grande précision. Cette précision est nécessaire pour assurer que le rayonnement lumineux incident intercepte l'élément optique précisément au niveau de la zone microstructurée, afin de lui impartir une transformation choisie. Ce besoin de précision dans l'agencement des pièces optiques composant le dispositif est d'autant plus vrai qu'une même pièce peut intercepter plusieurs fois le chemin optique du rayonnement incident (typiquement entre 3 et 25 fois comme on vient de l'énoncer), si bien qu'un écart de positionnement ou d'orientation minime vis-à-vis du positionnement requis peut avoir une grande incidence sur le bon fonctionnement du dispositif.

Par ailleurs, les tolérances optiques de positionnement (de l'ordre du micromètre et du microradian pour ce qui concerne la précision angulaire) sont bien plus réduites que les tolérances géométriques de fabrication des pièces (du moins si l'on recherche des pièces pouvant être produites avec un coût raisonnable), si bien que la position de ces pièces, dans leurs positions d'assemblage, ne peut être généralement établie à l'avance avec la précision nécessaire.

Pour assembler les pièces au support, et notamment pour constituer la cavité multi passage, on positionne d'abord grossièrement l'étage d'entrée, le miroir et l'élément optique en vis-à-vis l'un de l'autre. On injecte un rayonnement lumineux incident dans la cavité ainsi formée, et on détecte l'intensité du signal lumineux en sortie de la cavité. On ajuste aussi finement que possible la position et l'orientation relatives de l'étage d'entrée, du miroir et de l'élément optique selon tous les degrés de liberté disponible pour optimiser l'intensité détectée. Ce positionnement et cette orientation relatifs optimaux sont temporairement figés, par exemple à l'aide de pinces ajustables de maintien.

On utilise ensuite des cubes d'alignement (ou plus généralement des pièces d'alignement) présentant des faces planes et présentant des faces jointives perpendiculaires entre elles, pour fixer par l'intermédiaire d'une couche de colle ou d'adhésif l'étage d'entrée, le miroir et l'élément optique dans leurs positions optimales au support.

Deux faces planes du cube d'alignement sont respectivement mises en contact avec une face plane du support et une face plane d'assemblage de la pièce à fixer. On s'assure ainsi, en tirant profit des contacts plans relativement étendus, de la robustesse et de la stabilité de l'assemblage. D'une manière générale, on désigne par « interface d'assemblage », le contact plan existant entre les surfaces en contact de deux pièces assemblées l'une à l'autre.

Lorsque la pièce à fixer présente une orientation dans l'espace ne permettant pas de fournir une face qui puisse entrer en contact plan avec le support ou avec un premier cube d'alignement disposé sur le support, on peut assembler des cubes entre eux, au niveau de leurs faces planes, de manière à ce qu'une des faces de cet assemblage puisse entrer en contact plan avec la face d'assemblage de la pièce à fixer et qu'une autre face de cet assemblage puis entrer en contact plan avec le support.

Cette même approche peut être déployée pour assembler au support chacune des pièces formant l'élément optique.

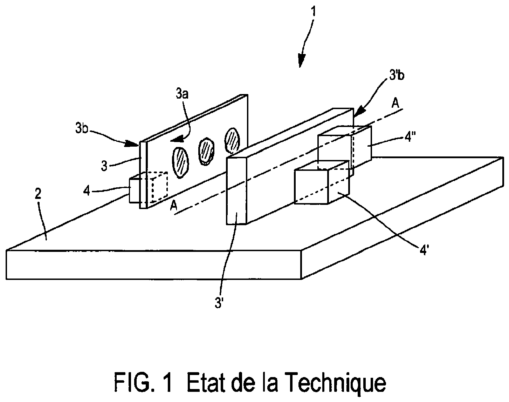

On a ainsi représenté sur la figure 1, une perspective schématique d'une cavité multi passage 1 composée d'un support plan 2 et de deux éléments optiques réfléchissants 3, 3' disposés en vis-à-vis l'un de l'autre. Un premier élément optique 3 présente une surface principale microstructurée 3a pour modifier la phase d'un rayonnement lumineux incident. Il est assemblé au support plan par l'intermédiaire d'un premier cube d'alignement 4, dont une première face est en contact plan avec le support, et une autre face, perpendiculaire à la première, est en contact plan avec une face d'assemblage 3b du premier élément optique. Un deuxième élément optique 3', correspondant ici à un simple miroir, est disposé sur le support 2 par l'intermédiaire d'un deuxième cube d'alignement 4' dont une face est en contact plan avec le support 2. Une deuxième face du deuxième cube 4' est en contact plan avec une première face d'un troisième cube 4". Le troisième cube 4" est lui-même en contact plan, au niveau d'une deuxième face perpendiculaire à sa première face, avec une face d'assemblage 3b' du miroir 3'. Cette combinaison de cube permet d'orienter angulairement le miroir selon un axe principal A avec précision et de figer cette orientation (ainsi que l'orientation selon les deux directions perpendiculaires à cet axe A) par l'intermédiaire des interfaces d'assemblage.

Dans un tel schéma d'assemblage, chaque interface est une source potentielle de défaillance. Les contraintes, par exemple d'origine thermique, auxquelles peut être soumis l'ensemble peuvent conduire au développement de légers déplacements qui sont susceptibles d'affecter le bon fonctionnement du dispositif. Il en est de même de la couche d'adhésif ou de colle qui permet de sceller deux faces entre elles, et dont les propriétés peuvent varier au cours du temps, et selon les conditions d'environnement auxquels est exposé le dispositif.

Le brevet US6249346B1 divulgue un spectrophotomètre monolithique. Néanmoins, l'architecture proposée dans ce document n'est pas satisfaisante. En effet, elle reste relativement compliquée à fabriquer.

La présente invention vise à pallier tout ou partie des inconvénients précités.

### BREVE DESCRIPTION DE L'INVENTION

En vue de la réalisation de l'un de ces buts, l'objet de l'invention propose une cavité multi passage selon les termes de la revendication 1. Notamment, la présente invention propose un cavité multi passage composée de l'assemblage d'un support plan, d'une pièce d'alignement, d'un premier et d'un second élément optique réfléchissant présentant chacun une face principale disposée en vis-à-vis l'une de l'autre, la face principale de l'un au moins des éléments optiques étant microstructuré pour modifier la phase d'un rayonnement lumineux incident qui se réfléchit une pluralité de fois sur chacun des éléments optiques pour former un rayonnement transformé.

Selon l'invention, la cavité multi passage comporte précisément trois interfaces d'assemblage entre le support plan, la pièce d'alignement, les premier et second éléments optiques réfléchissants.

En limitant à trois le nombre d'interfaces d'assemblage de la cavité multi passage, on limite le risque de variations dans le temps du positionnement et de l'orientation relatifs des pièces la composant.

Selon d'autres caractéristiques avantageuses et non limitatives de l'invention, prises seules ou selon toute combinaison techniquement réalisable :
- le support comprend une face principale délimitée par au moins une tranche plane et dans laquelle le premier élément optique réfléchissant est assemblé à la tranche plane du support au niveau d'une première interface d'assemblage, et la face principale du second élément optique réfléchissant est délimitée par au moins une tranche latérale plane, la tranche latérale plane étant assemblée à une première face plane de la pièce d'alignement au niveau d'une deuxième interface, et la pièce d'alignement présentant une autre face plane, perpendiculaire à la première, assemblée au support au niveau d'une troisième interface ;
- la face principale du premier ou du second élément optique est microstructurée, la face principale du premier élément optique réfléchissant est délimitée par une tranche plane longitudinale, la tranche plane longitudinale étant assemblée à la face plane du support, et la face principale du second élément optique réfléchissant est délimitée par au moins une tranche latérale plane, la tranche latérale plane étant assemblée à une première face plane de la pièce d'alignement au niveau d'une deuxième interface, et la pièce d'alignement présentant une autre face plane, perpendiculaire à la première, assemblée au support au niveau d'une troisième interface ;

- les faces principales du premier et du second élément optique sont microstructurées ;
- seule la face principale du premier élément optique est microstructurée ou seule la face principale du second élément optique est microstructurée ;

### BREVE DESCRIPTION DES DESSINS

D'autres caractéristiques et avantages de l'invention ressortiront de la description détaillée de l'invention qui va suivre en référence aux figures annexées sur lesquels :
- La figure 1 représente une perspective schématique d'une cavité multi passage de l'état de la technique ;
- la figure 2 représente une cavité multi passage conforme à un premier mode de mise en oeuvre de l'invention;
- la figure 3 représente une cavité multi passage conforme à un deuxième mode de mise en oeuvre de l'invention.

### DESCRIPTION DETAILLEE DE L'INVENTION

Par souci de simplification de la description à venir, les mêmes références sont utilisées pour des éléments identiques ou assurant la même fonction dans l'état de la technique ou dans les différents modes de mise en oeuvre exposés de l'invention.

Par souci de clarté, on définit dans la présente demande un rayonnement lumineux comme un rayonnement formé d'au moins un mode d'un champ électromagnétique, chaque mode formant une distribution spatio-fréquentielle de l'amplitude, de la phase, de la polarisation du champ. En conséquence, la modification, la manipulation ou la transformation de la phase du rayonnement lumineux désigne la modification ou la transformation spatio-fréquentielle d'au moins un des modes du rayonnement.

On désignera par « forme » d'un rayonnement la distribution transverse de l'amplitude et de la phase du mode ou la combinaison des distributions transverses d'amplitude et de phase des modes composant ce rayonnement.

D'une manière très générale, la présente description porte sur un dispositif optique visant à manipuler un rayonnement lumineux incident pour former un rayonnement lumineux transformé. Avantageusement, la forme du rayonnement lumineux incident et du rayonnement lumineux transformés sont différentes l'une de l'autre. La manipulation du rayonnement lumineux incident comprend la modification contrôlée du profil de phase transverse de ce rayonnement, au cours d'une pluralité de transformations primaires qui contribuent, en combinaison, à opérer une fonction optique déterminée. Il peut s'agir d'un multiplexage ou d'un démultiplexage spatial du rayonnement incident ou de toute autre transformation modale dans le domaine spatial. Il peut par exemple s'agir d'opérer 4 transformations primaires ou plus, comme par exemple 8, 10, 12, 14, voire même 20 transformations élémentaires ou plus.

Le dispositif optique comprend, sur un support 2, une cavité multi passage 1 pour transformer le rayonnement lumineux incident en un rayonnement lumineux transformé. Le dispositif optique peut éventuellement comprendre un étage d'entrée et un étage de sortie permettant respectivement de guider l'injection du rayonnement lumineux incident et l'extraction du rayonnement lumineux transformé de la cavité 1, lorsque ces rayonnements ne sont pas simplement injectés et/ou extraits du dispositif 1 par simple propagation en espace libre.

Par souci de simplification des figures illustrant les différents modes de mise en oeuvre de l'invention, on a omis de représenter sur ces figures l'étage d'entrée et l'étage de sortie.

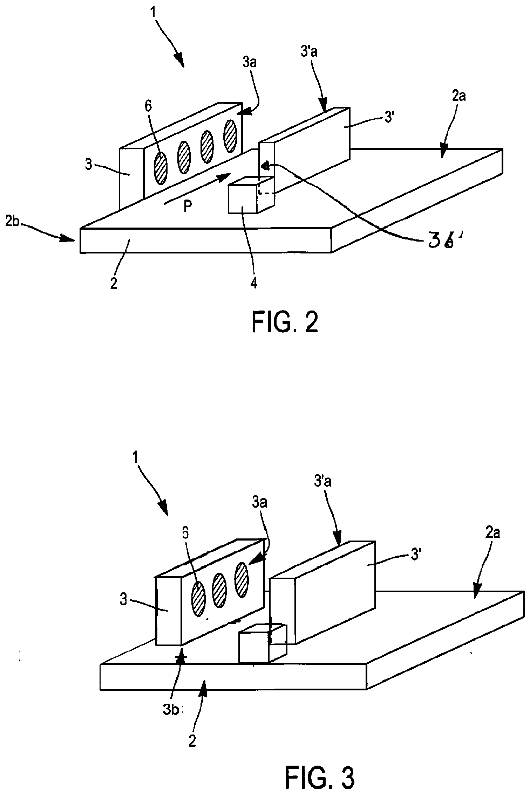

On a ainsi représenté sur la figure 2, une cavité multi passage 1 conforme à un premier mode de mise en oeuvre de l'invention.

La cavité multi passage 1 est composée de l'assemblage d'un support plan 2, d'une pièce d'alignement 4 et de deux éléments optiques réfléchissants 3, 3' disposés en vis-à-vis l'un de l'autre. Aucune autre pièce n'est nécessaire pour former la cavité multi passage 1, c'est à dire assembler entre eux le support 2, la pièce d'alignement et les deux éléments optiques réfléchissant dans des positions et orientations relatives rendant la cavité fonctionnelle.

Le premier élément optique 3 présente une surface principale 3a, tournée vers l'intérieur de la cavité 1, microstructurée. Cette microstructuration est configurée pour modifier la phase d'un rayonnement lumineux incident qui s'y réfléchit une pluralité de fois au cours de sa propagation dans la cavité 1 selon la direction générale P.

Par « face ou surface microstructurée» on signifie, à titre d'exemple, que la face ou la surface peut présenter des « pixels » dont les dimensions sont comprises entre quelques microns à quelques centaines de microns. Chaque pixel présente une élévation, par rapport à un plan moyen définissant la face ou la surface en question, d'au maximum quelques microns ou d'au maximum quelques centaines de microns.

Comme cela est bien visible sur la figure 2, la face principale 3a du premier élément optique 3 comprend une pluralité de zones microstructurée 6, chaque zone microstructurée 6 étant disposée sur la face principale 3a pour précisément recevoir le rayonnement lumineux incident et y appliquer une transformation de phase primaire.

On pourra se référer aux différents documents cités de l'état de la technique pour bien comprendre comment l'application répétée de ces transformations primaires permet d'opérer une transformation choisie du rayonnement lumineux incident et comment on peut concevoir l'élément optique 3 pour qu'il mette en oeuvre une telle transformation. On se refera également à ces documents pour obtenir des exemples de méthodes de conception numérique des microstructuration disposées sur la face principale 3a de l'élément optique 3. Le modèle numérique de ces microstructuration peut être employé pour fabriquer l'élément optique, par exemple par usinage, moulage et/ou gravure d'une pièce optique brute.

Dans le cas de l'exemple représenté sur la figure 2, le premier élément optique 3 est une lame de phase réfléchissante et le second élément optique 3' est un simple miroir, c'est-à-dire que sa face principale 3'a, orientée vers l'intérieure de la cavité 1 n'est pas microstructurée.

On note que les zones microstructurées 6 de la face principale 3a du premier élément optique 3 sont ici distinctes les unes des autres, mais cette caractéristique n'est pas essentielle et toute autre configuration de microstructuration pourrait convenir, dans la mesure où elle permet d'appliquer une transformation déterminée du rayonnement incident.

Le support 2 comprend une face principale 2a, délimitée par au moins une tranche plane 2b, perpendiculaire à la surface principale 2a du support 2. La face principale 3a du premier élément optique 3 est assemblée à la tranche plane 2b du support 2 au niveau d'une première interface d'assemblage. Dans cette configuration, on peut ajuster la position angulaire du premier élément optique autour d'un axe de rotation perpendiculaire à sa surface principale 3a. On peut donc ajuster la position angulaire relative du premier élément optique 3 vis-à-vis du second élément optique 3' autour d'un axe normal à la surface principal 3a du premier élément 3. Cet ajustement est particulièrement intéressant à exploiter lorsque les deux éléments optiques 3, 3' sont microstructurés

Le miroir 3' est disposé pour que sa face principale réfléchissante 3'a soit orientée vers l'intérieur de la cavité 1, en vis-à-vis de la face principale 3a du premier élément optique 3.

La face principale réfléchissante 3'a du miroir 3' est délimitée par au moins une tranche latérale plane 3b' c'est-à-dire une surface plane dont la normale est orientée selon la direction générale P. Cette tranche latérale plane 3b' est assemblée à une première face plane de la pièce d'alignement 4 (ici un cube 4), au niveau d'une deuxième interface. La pièce d'alignement 4 présente une autre face plane, perpendiculaire à la première, assemblée au support 2 au niveau d'une troisième interface.

On notera que ce mode de mise en oeuvre tire profit des degrés de liberté offerts dans le positionnement et l'orientation du deuxième élément optique, lorsque celui-ci consiste en un miroir 3', c'est à dire une surface réfléchissante non microstructurée. En effet, un miroir peut, dans une certaine mesure, être déplacé en translation selon la direction P et en rotation selon un axe perpendiculaire à sa surface principale réfléchissante 3'a, sans affecter le bon fonctionnement du dispositif optique. La pièce d'alignement 4 assemblée à la tranche latérale plane du miroir permet de figer l'orientation de ce miroir autour d'un axe de rotation de direction P dans une position fonctionnelle. Le miroir 3' n'est généralement pas en contact plan avec le support 2, et il n'existe donc pas d'interface d'assemblage entre ces deux pièces.

Pour permettre la mise en contact plan de la pièce d'alignement 4 à la fois avec le support 2 et avec la tranche plane latérale 3b' du miroir, on impose le placement angulaire du miroir autour de son axe de rotation perpendiculaire à sa surface principale 3'a pour que la tranche plane latérale 3b' soit perpendiculaire à la surface plane 2a du support 2.

La configuration d'assemblage qui vient d'être décrite est particulièrement avantageuse, en ce qu'elle limite le nombre d'interfaces d'assemblage à trois, ce qui améliore de manière notable la robustesse de la cavité et la simplicité de son assemblage, sans imposer de contraintes aux tolérances géométriques des pièces qui la composent. Elle ne modifie pas non plus le procédé général d'assemblage présenté en préambule à cette demande, ce qui lui permet d'être déployée avec les mêmes équipements et méthodes existants. Les trois interfaces permettent de régler précisément trois degrés de liberté qui sont les seuls dont le réglage précis est absolument nécessaire au bon assemblage du dispositif.

Dans une variante de ce mode de mise en oeuvre de l'invention, les faces principales 3a, 3'a du premier et du second élément optique 3, 3' sont microstructurées. Le second élément optique 3' n'est donc pas un simple miroir, mais peut être constitué d'une lame de phase réfléchissante, similaire au premier élément optique.

Dans une autre variante, seule la face principale 3'a du second élément optique 3' est structurée et le premier élément optique 3 est formé d'un simple miroir.

La figure 3 représente un exemple d'un deuxième mode de mise en oeuvre d'une cavité multi passage 1 conforme à l'invention.

Dans ce mode de mise en oeuvre, le second élément optique 3' est assemblé au support 2 de la même manière que dans le premier mode de mise en oeuvre, au niveau de deux interfaces. Sa description ne sera donc pas répétée, par souci de concision.

La face principale 3a du premier élément optique 3 est délimitée par une tranche plane longitudinale 3b, perpendiculaire à la face principale. Ce second mode de mise en oeuvre diffère du premier mode de mise en oeuvre en ce que la tranche plane longitudinale 3b est assemblée à la face plane 2a du support 2, ce qui constitue la troisième interface.

Dans ce deuxième mode de mise en oeuvre, et contrairement au premier mode de mise en oeuvre, il n'est pas possible d'ajuster la position angulaire relative du premier élément optique 3 vis-à-vis du second élément optique 3' autour d'un axe normal à la surface principal 3a. Aussi, ce mode de mise en oeuvre est plus particulièrement adapté aux configurations où seule la face principale 3a du premier élément optique 3 ou seule la face principale 3'a du second élément optique 3' est microstructurée. En d'autres termes, les zones microstructurées peuvent être portées par l'une ou l'autre des faces principales 3a, 3'a des éléments optiques 3, 3', mais, préférentiellement pas par les deux, sans que cette option ne soit néanmoins totalement exclue.

Quel que soit le mode de mise en oeuvre choisi et la variante choisie, une cavité multi passage conforme à l'invention comporte précisément trois interfaces d'assemblage entre le support, la pièce d'alignement et les éléments optiques. Ces trois interfaces sont nécessaires et suffisantes pour positionner relativement les pièces 3, 3' avec une précision de l'ordre du micromètre et une précision angulaire de l'ordre du micro-radian. La limitation du nombre d'interfaces à trois rend le dispositif particulièrement robuste dans le temps en limitant les sources de potentielles de défaillance.

Bien entendu l'invention n'est pas limitée aux modes de mise en oeuvre décrits et on peut y apporter des variantes de réalisation sans sortir du cadre de l'invention tel que défini par les revendications.

Ainsi, bien que l'on ait indiqué que les interfaces d'assemblage étaient formées par la mise en contact plan de deux pièces planes entre elles, l'invention prévoit de renforcer leur adhésion par l'ajout d'une colle ou d'une couche adhésive qui peut être formée avant l'étape d'assemblage ou introduit entre les deux faces en contact, après leur assemblage.

Les matériaux composant les différentes pièces formant la cavité sont avantageusement les mêmes, de manière à limiter les contraintes d'origine thermique pouvant s'appliquer au niveau des interfaces d'assemblage. Il peut notamment s'agir de silicium, de verre, de quartz.

## Revendications

1. Cavité multi passage (1) composée de l'assemblage d'un support plan (2), d'une pièce d'alignement (4), d'un premier et d'un second élément optique réfléchissant (3,3') présentant chacun une face principale (3a, 3'a) disposées en vis-à-vis l'une de l'autre, la face principale (3a, 3'a) de l'un au moins des éléments optiques (3, 3') étant microstructuré pour modifier la phase d'un rayonnement lumineux incident qui se réfléchit une pluralité de fois sur chacun des éléments optiques (3, 3') pour former un rayonnement transformé, la cavité multi passage (1) étant **caractérisée en ce que** le second élément optique réfléchissant (3') est lié au support par l'intermédiaire de la pièce d'alignement (4) de sorte que ladite cavité multi passage (1) comporte précisément trois interfaces d'assemblage entre le support plan (2), la pièce d'alignement (4), les premier et second éléments optiques réfléchissants (3, 3').

2. Cavité multi passage (1) selon la revendication précédente dans laquelle le support (2) comprend une face principale (2a) délimitée par au moins une tranche plane (2b) et dans laquelle le premier élément optique réfléchissant (3) est assemblé à la tranche plane (2b) du support (2) au niveau d'une première interface d'assemblage, et la face principale (3'a) du second élément optique réfléchissant (3') est délimitée par au moins une tranche latérale plane (3b'), la tranche latérale plane (3b') étant assemblée à une première face plane de la pièce d'alignement (4) au niveau d'une deuxième interface, la pièce d'alignement (4) présentant une autre face plane, perpendiculaire à la première, assemblée au support (2) au niveau d'une troisième interface.

3. Cavité multi passage (1) selon la revendication précédente dans lequel les faces principales (3a, 3'a) du premier et du second élément optique (3, 3') sont microstructurées.

4. Cavité multi passage (1) selon la revendication 2 dans laquelle seule la face principale (3a) du premier élément optique (3) est microstructurée.

5. Cavité multi passage (1) selon la revendication 2 dans laquelle seule la face principale (3'a) du second élément optique (3') est microstructurée.

6. Cavité multi passage (1) selon la revendication 1 dans laquelle la face principale (3a, 3'a) du premier ou du second élément optique (3, 3') est microstructurée, et dans lequel :
- la face principale (3a) du premier élément optique réfléchissant (3) est délimitée par une tranche plane longitudinale (3b), la tranche plane longitudinale (3b) étant assemblée à la face plane (2a) du support (2) ;
- la face principale (3'a) du second élément optique réfléchissant (3') est délimitée par au moins une tranche latérale plane (3b'), la tranche latérale plane (3b') étant assemblée à une première face plane de la pièce d'alignement (4) au niveau d'une deuxième interface ;
- la pièce d'alignement (4) présente une autre face plane, perpendiculaire à la première, assemblée au support (2) au niveau d'une troisième interface.

7. Cavité multi passage (1) selon la revendication précédente dans laquelle seule la face principale (3a, 3'a) du premier ou du second élément optique (3, 3') est microstructurée.

8. Cavité multi passage (1) selon la revendication 6 dans laquelle les faces principales (3a, 3'a) du premier et du second élément optique (3, 3') sont microstructurées.

9. Procédé de fabrication d'un cavité multi passage, la cavité multi passage comprenant un support plan (2), une pièce d'alignement (4), un premier et un second élément optique réfléchissant (3,3') présentant chacun une face principale (3a, 3'a) disposées en vis-à-vis l'une de l'autre, la face principale (3a, 3'a) de l'un au moins des éléments optiques (3, 3') étant microstructuré pour modifier la phase d'un rayonnement lumineux incident qui se réfléchit une pluralité de fois sur chacun des éléments optiques (3, 3') pour former un rayonnement transformé,
le procédé comprenant les étapes suivantes :
- l'assemblage de l'un du premier élément optique (3) avec le support plan (2) ;
- l'assemblage du second élément optique (3') avec le support plan (2) au moyen d'une pièce d'alignement (4) le procédé comprend précisément la formation de trois interfaces d'assemblage entre le support plan (2), la pièce d'alignement (4), les premier et second éléments optiques réfléchissants (3, 3'), l'adhésion au niveau de chacune des interfaces étant renforcée par l'ajout de colle ou d'une couche adhésive.

10. Procédé selon la revendication 9, dans lequel le support plan (2) comprend une face principale (2a) délimitée par au moins une tranche plane (2b), la face principale (3'a) du second élément optique réfléchissant (3') est délimitée par au moins une tranche latérale plane (3b'), la pièce d'alignement (4) est pourvue d'une première face plane et d'une autre face plane perpendiculaire à la première face plane,
l'assemblage du premier élément optique (3) avec le support plan (2) comprend la mise en contact de la tranche plane (2b) avec la face principale (3a) du premier élément optique (3) pour former une des trois interfaces d'assemblage, dite première interface d'assemblage, entre le support plan (2) et le premier élément optique (3),
l'assemblage du second élément optique (3') avec le support plan comprend d'une part la mise en contact de la tranche latérale plane (3b') avec la première face plane, et d'autre part la mise en contact de l'autre face plane avec la face principale (2a) du support plan (2), pour former les deux autres interfaces d'assemblage dites, respectivement, deuxième interface d'assemblage et troisième interface d'assemblage.

11. Procédé selon la revendication 10, dans lequel les faces principales (3a, 3'a) du premier et du second élément optique (3, 3') sont microstructurées.

12. Procédé selon la revendication 11, dans lequel seule la face principale (3a) du premier élément optique (3) est microstructurée.

13. Procédé selon la revendication 11, dans lequel seule la face principale (3'a) du second élément optique (3') est microstructurée.

14. Procédé selon la revendication 9, dans lequel la face principale (3a, 3'a) du premier ou du second élément optique (3, 3') est microstructurée, la face principale (3a) du premier élément optique réfléchissant (3) est délimitée par une tranche plane longitudinale (3b), la face principale (3'a) du second élément optique réfléchissant (3') est délimitée par au moins une tranche latérale plane (3b'), la pièce d'alignement (4) comprend une première face plane et un autre face plane perpendiculaire à la première face plane,
l'assemblage du premier élément optique (3) avec le support plan (2) comprend la mise en contact de la tranche plane longitudinale (3b) avec la face principale (2a) du support plan (2) pour former une des trois interfaces d'assemblage, dite première interface d'assemblage, entre le support plan (2) et le premier élément optique (3),
et
l'assemblage du second élément optique (3') avec le support plan (2) comprend d'une part la mise en contact de la tranche latérale plane (3b') avec la première face plane, et d'autre part la mise en contact de l'autre face plane avec la face principale (2a) du support plan (2), pour former les deux autres interfaces d'assemblage dites, respectivement, deuxième interface d'assemblage et troisième interface d'assemblage.

## Patentansprüche

1. Hohlraum (1) mit mehreren Durchgängen, zusammengesetzt aus der Verbindung aus einer ebenen Unterlage (2), einem Ausrichtungsstück (4), einem ersten und einem zweiten reflektierenden optischen Element (3, 3'), die jeweils eine Hauptfläche (3a, 3'a) aufweisen, die einander gegenüberliegend angeordnet sind, wobei die Hauptfläche (3a, 3'a) von mindestens einem der optischen Elemente (3, 3') mikrostrukturiert ist, um die Phase einer einfallenden Lichtstrahlung zu verändern, die mehrmals auf jedem der optischen Elemente (3, 3') reflektiert wird, um eine transformierte Strahlung zu bilden, wobei der Hohlraum (1) mit mehreren Durchgängen **dadurch gekennzeichnet ist, dass** das zweite reflektierende optische Element (3') an die Unterlage über das Ausrichtungsstück (4) gebunden ist, so dass der Hohlraum (1) mit mehreren Durchgängen genau drei Verbindungsgrenzflächen zwischen der ebenen Unterlage (2), dem Ausrichtungsstück (4), dem ersten und dem zweiten reflektierenden optischen Element (3, 3') enthält.

2. Hohlraum (1) mit mehreren Durchgängen nach dem vorstehenden Anspruch, wobei die Unterlage (2) eine Hauptfläche (2a) umfasst, die durch mindestens einen ebenen Rand (2b) begrenzt ist, und wobei das erste reflektierende optische Element (3) an dem ebenen Rand (2b) der Unterlage (2) an einer ersten Verbindungsgrenzfläche verbunden ist und die Hauptfläche (3'a) des zweiten reflektierenden optischen Elements (3') durch mindestens einen ebenen Seitenrand (3b') begrenzt ist, wobei der ebene Seitenrand (3b') mit einer ersten ebenen Fläche des Ausrichtungsstücks (4) an einer zweiten Grenzfläche verbunden ist, wobei das Ausrichtungsstück (4) eine andere ebene Fläche aufweist, die senkrecht zur ersten ist, die mit der Unterlage (2) an einer dritten Grenzfläche verbunden ist.

3. Hohlraum (1) mit mehreren Durchgängen nach dem vorstehenden Anspruch, wobei die Hauptflächen (3a, 3'a) des ersten und des zweiten optischen Elements (3, 3') mikrostrukturiert sind.

4. Hohlraum (1) mit mehreren Durchgängen nach Anspruch 2, wobei nur die Hauptfläche (3a) des ersten optischen Elements (3) mikrostrukturiert ist.

5. Hohlraum (1) mit mehreren Durchgängen nach Anspruch 2, wobei nur die Hauptfläche (3'a) des zweiten optischen Elements (3') mikrostrukturiert ist.

6. Hohlraum (1) mit mehreren Durchgängen nach Anspruch 1, wobei die Hauptfläche (3a, 3'a) des ersten oder des zweiten optischen Elements (3, 3') mikrostrukturiert ist, und wobei:
- die Hauptfläche (3a) des ersten reflektierenden optischen Elements (3) durch einen ebenen Längsrand (3b) begrenzt ist, wobei der ebene Längsrand (3b) mit der ebenen Fläche (2a) der Unterlage (2) verbunden ist;
- die Hauptfläche (3'a) des zweiten reflektierenden optischen Elements (3') durch mindestens einen ebenen Seitenrand (3b') begrenzt ist, wobei der ebene Seitenrand (3b') mit einer ersten ebenen Fläche des Ausrichtungsstücks (4) an einer zweiten Grenzfläche verbunden ist;
- das Ausrichtungsstück (4) eine andere ebene Fläche aufweist, die senkrecht zur ersten ist, die mit der Unterlage (2) an einer dritten Grenzfläche verbunden ist.

7. Hohlraum (1) mit mehreren Durchgängen nach dem vorstehenden Anspruch, wobei nur die Hauptfläche (3a, 3'a) des ersten oder des zweiten optischen Elements (3, 3') mikrostrukturiert ist.

8. Hohlraum (1) mit mehreren Durchgängen nach Anspruch 6, wobei die Hauptflächen (3a, 3'a) des ersten und des zweiten optischen Elements (3, 3') mikrostrukturiert sind.

9. Verfahren zum Herstellen eines Hohlraums mit mehreren Durchgängen, wobei der Hohlraum mit mehreren Durchgängen eine ebene Unterlage (2), ein Ausrichtungsstück (4), ein erstes und ein zweites reflektierendes optisches Element (3, 3') umfasst, die jeweils eine Hauptfläche (3a, 3'a) aufweisen, die einander gegenüberliegend angeordnet sind, wobei die Hauptfläche (3a, 3'a) von mindestens einem der optischen Elemente (3, 3') mikrostrukturiert ist, um die Phase einer einfallenden Lichtstrahlung zu verändern, die mehrmals auf jedem der optischen Elemente (3, 3') reflektiert wird, um eine transformierte Strahlung zu bilden,
wobei das Verfahren die folgenden Schritte umfasst:
- Verbinden des ersten optischen Elements (3) mit der ebenen Unterlage (2);
- Verbinden des zweiten optischen Elements (3') mit der ebenen Unterlage (2) mittels eines Ausrichtungsstücks (4)
wobei das Verfahren exakt das Bilden von drei Verbindungsgrenzflächen zwischen der ebenen Unterlage (2), dem Ausrichtungsstück (4), dem ersten und dem zweiten reflektierenden optischen Element (3, 3') umfasst, wobei die Haftung an jeder der Grenzflächen durch Hinzufügen von Klebstoff oder einer Klebstoffschicht verstärkt wird.

10. Verfahren nach Anspruch 9, wobei die ebene Unterlage (2) eine Hauptfläche (2a) umfasst, die durch mindestens einen ebenen Rand (2b) begrenzt ist, wobei die Hauptfläche (3'a) des zweiten reflektierenden optischen Elements (3') durch mindestens einen ebenen Seitenrand (3b') begrenzt ist, wobei das Ausrichtungsstück (4) mit einer ebenen ersten Fläche und einer anderen ebenen Fläche senkrecht zur ersten ebenen Fläche versehen ist,
wobei das Verbinden des ersten optischen Elements (3) mit der ebenen Unterlage (2) das Inkontaktbringen des ebenen Randes (2b) mit der Hauptfläche (3a) des ersten optischen Elements (3) umfasst, um eine der drei Verbindungsgrenzflächen, die sogenannte erste Verbindungsgrenzfläche, zwischen der ebenen Unterlage (2) und dem ersten optischen Element (3) zu bilden,
wobei das Zusammenbauen des zweiten optischen Elements (3') mit der ebenen Unterlage einerseits das Inkontaktbringen des ebenen Seitenrandes (3b') mit der ersten ebenen Fläche, und andererseits das Inkontaktbringen der anderen ebenen Fläche mit der Hauptfläche (2a) der ebenen Unterlage (2) umfasst, um die zwei anderen Verbindungsgrenzflächen, die sogenannte zweite Verbindungsgrenzfläche beziehungsweise die dritte Verbindungsgrenzfläche, zu bilden.

11. Verfahren nach Anspruch 10, wobei die Hauptflächen (3a, 3'a) des ersten und des zweiten optischen Elements (3, 3') mikrostrukturiert sind.

12. Verfahren nach Anspruch 11, wobei nur die Hauptfläche (3a) des ersten optischen Elements (3) mikrostrukturiert ist.

13. Verfahren nach Anspruch 11, wobei nur die Hauptfläche (3'a) des zweiten optischen Elements (3') mikrostrukturiert ist.

14. Verfahren nach Anspruch 9, wobei die Hauptfläche (3a, 3'a) des ersten oder des zweiten optischen Elements (3, 3') mikrostrukturiert ist, wobei die Hauptfläche (3a) des ersten reflektierenden optischen Elements (3) durch einen ebenen Längsrand (3b) begrenzt ist, wobei die Hauptfläche (3'a) des zweiten reflektierenden optischen Elements (3') durch mindestens einen ebenen Seitenrand (3b') begrenzt ist, wobei das Ausrichtungsstück (4) eine ebene erste Fläche und eine andere ebene Fläche senkrecht zur ersten ebenen Fläche umfasst,
wobei das Verbinden des ersten optischen Elements (3) mit der ebenen Unterlage (2) das Inkontaktbringen des ebenen Längsrandes (3b) mit der Hauptfläche (2a) der ebenen Unterlage (2) umfasst, um eine der drei Verbindungsgrenzflächen, die sogenannte erste Verbindungsgrenzfläche, zwischen der ebenen Unterlage (2) und dem ersten optischen Element (3) zu bilden,
und
wobei das Verbinden des zweiten optischen Elements (3') mit der ebenen Unterlage (2) einerseits das Inkontaktbringen des ebenen Seitenrandes (3b') mit der ersten ebenen Fläche, und andererseits das Inkontaktbringen der anderen ebenen Fläche mit der Hauptfläche (2a) der ebenen Unterlage (2) umfasst, um die zwei anderen Verbindungsgrenzflächen, die sogenannte zweite Verbindungsgrenzfläche beziehungsweise die dritte Verbindungsgrenzfläche, zu bilden.

## Claims

1. Multi-passage cavity (1) consisting of the assembly of a planar support (2), an alignment part (4), and a first and a second reflective optical element (3, 3') each having a main face (3a, 3'a) arranged opposite each other, the main face (3a, 3'a) of at least one of the optical elements (3, 3') being microstructured in order to modify the phase of incident light radiation which is reflected a plurality of times on each of the optical elements (3, 3') to form transformed radiation, the multi-passage cavity (1) being **characterized in that** the second reflective optical element (3') is connected to the support by means of the alignment part (4) so that said multi-passage cavity (1) comprises precisely three joining interfaces between the planar support (2), the alignment part (4), and the first and second reflective optical elements (3, 3').

2. Multi-passage cavity (1) according to the preceding claim, wherein the support (2) comprises a main face (2a) delimited by at least one planar edge (2b) and wherein the first reflective optical element (3) is joined to the planar edge (2b) of the support (2) at a first joining interface, and the main face (3'a) of the second reflective optical element (3') is delimited by at least one lateral planar edge (3b'), the lateral planar edge (3b') being joined to a first planar face of the alignment part (4) at a second interface, the alignment part (4) having another planar face, perpendicular to the first, joined to the support (2) at a third interface.

3. Multi-passage cavity (1) according to the preceding claim, wherein the main faces (3a, 3'a) of the first and the second optical element (3, 3') are microstructured.

4. Multi-passage cavity (1) according to claim 2, wherein only the main face (3a) of the first optical element (3) is microstructured.

5. Multi-passage cavity (1) according to claim 2, wherein only the main face (3'a) of the second optical element (3') is microstructured.

6. Multi-passage cavity (1) according to claim 1, wherein the main face (3a, 3'a) of the first or second optical element (3, 3') is microstructured, and wherein:
- the main face (3a) of the first reflective optical element (3) is delimited by a longitudinal planar edge (3b), the longitudinal planar edge (3b) being joined to the planar face (2a) of the support (2);
- the main face (3'a) of the second reflective optical element (3') is delimited by at least one lateral planar edge (3b'), the lateral planar edge (3b') being joined to a first planar face of the alignment part (4) at a second interface;
- the alignment part (4) has another planar face, perpendicular to the first, joined to the support (2) at a third interface.

7. Multi-passage cavity (1) according to the preceding claim, wherein only the main face (3a, 3'a) of the first or second optical element (3, 3') is microstructured.

8. Multi-passage cavity (1) according to claim 6, wherein the main faces (3a, 3'a) of the first and the second optical element (3, 3') are microstructured.

9. Method for producing a multi-passage cavity, the multi-passage cavity comprising a planar support (2), an alignment part (4), and a first and a second reflective optical element (3, 3') each having a main face (3a, 3'a) arranged opposite each other, the main face (3a, 3'a) of at least one of the optical elements (3, 3') being microstructured in order to modify the phase of incident light radiation which is reflected a plurality of times at each of the optical elements (3, 3') to form transformed radiation, the method comprising the following steps:
- joining one of the first optical element (3) to the planar support (2);
- joining the second optical element (3') to the planar support (2) by means of an alignment part (4)
the method precisely comprising forming three joining interfaces between the planar support (2), the alignment part (4), and the first and second reflective optical elements (3, 3'), the adhesion at each of the interfaces being reinforced by the addition of glue or an adhesive layer.

10. Method according to claim 9, wherein the planar support (2) comprises a main face (2a) delimited by at least one planar edge (2b), the main face (3'a) of the second reflective optical element (3') is delimited by at least one lateral planar edge (3b'), the alignment part (4) is provided with a first planar face and another planar face perpendicular to the first planar face,
the joining of the first optical element (3) to the planar support (2) comprises placing the planar edge (2b) in contact with the main face (3a) of the first optical element (3) to form one of the three joining interfaces, referred to as the first joining interface, between the planar support (2) and the first optical element (3),
the joining of the second optical element (3') to the planar support comprises placing the lateral planar edge (3b') in contact with the first planar face, and placing the other planar face in contact with the main face (2a) of the planar support (2), to form the two other joining interfaces referred to, respectively, as the second joining interface and the third joining interface.

11. Method according to claim 10, wherein the main faces (3a, 3'a) of the first and the second optical element (3, 3') are microstructured.

12. Method according to claim 11, wherein only the main face (3a) of the first optical element (3) is microstructured.

13. Method according to claim 11, wherein only the main face (3'a) of the second optical element (3') is microstructured.

14. Method according to claim 9, wherein the main face (3a, 3'a) of the first or second optical element (3, 3') is microstructured, the main face (3a) of the first reflective optical element (3) is delimited by a longitudinal planar edge (3b), the main face (3'a) of the second reflective optical element (3') is delimited by at least one lateral planar edge (3b'), the alignment part (4) comprises a first planar face and another planar face perpendicular to the first planar face,
the joining of the first optical element (3) to the planar support (2) comprises placing the longitudinal planar edge (3b) in contact with the main face (2a) of the planar support (2) to form one of the three joining interfaces, referred to as the first joining interface, between the planar support (2) and the first optical element (3),
and
the joining of the second optical element (3') to the planar support (2) comprises placing the lateral planar edge (3b') in contact with the first planar face, and placing the other planar face in contact with the main face (2a) of the planar support (2), to form the two other joining interfaces referred to, respectively, as the second joining interface and the third joining interface.
